# EUROPEAN PATENT SPECIFICATION

(11) **EP 3 455 310 B1**
(45) Date of publication and mention of the grant of the patent: **16.12.2020**
(21) Application number: 17719627.6
(22) Date of filing: 28.04.2017
(51) Int. Cl.: C09D 125/00

(54) **AQUEOUS COATING COMPOSITIONS CONTAINING POLYMER DISPERSION WITH LOW ELECTRICAL CONDUCTIVITY AND PHYLLOSILICATES FOR OXYGEN BARRIER COATINGS**
WÄSSRIGE BESCHICHTUNGSZUSAMMENSETZUNGEN MIT POLYMERDISPERSION MIT GERINGER ELEKTRISCHER LEITFÄHIGKEIT UND SCHICHTSILIKATEN FÜR SAUERSTOFFBARRIEREBESCHICHTUNGEN
COMPOSITIONS AQUEUSES DE REVÊTEMENT CONTENANT UNE DISPERSION DE POLYMÈRE À FAIBLE CONDUCTIVITÉ ÉLECTRIQUE ET DES PHYLLOSILICATES POUR REVÊTEMENTS DE BARRIÈRE CONTRE L'OXYGÈNE

(30) Priority: 12.05.2016 EP 16169380
(43) Date of publication of application: 20.03.2019
(73) Proprietor: BASF SE, 67056 Ludwigshafen am Rhein (DE)
(72) Inventor: PIETSCH, Ines, 67056 Ludwigshafen (DE); ROSCHMANN, Konrad, 67056 Ludwigshafen (DE); TONHAUSER, Christine, 67056 Ludwigshafen (DE); GEORGIEVA, Kristina, 68163 Mannheim (DE); BREU, Josef, 95447 Bayreuth (DE); FEICHT, Patrick, 95447 Bayreuth (DE)
(74) Representative: BASF IP Association
(86) International application number: PCT/EP2017/060177
(87) International publication number: WO 2017/194330

(56) References cited:
- WO-A1-03/025058
- WO-A1-2010/129028
- US-A- 5 925 428

## Description

The invention relates to an aqueous coating composition comprising an aqueous dispersion of a radically polymerized addition polymer with low electrical conductivity and phyllosilicate. The composition can be used for providing oxygen barrier properties to polymer films.

When products that are susceptible to oxidation or are sensitive to oxygen are packaged it is important that the packaging materials used have gas barrier properties, such as oxygen-barrier properties or water vapor barrier properties, i.e. that they have minimum oxygen and water vapor transmission or minimum oxygen and water vapor permeability. Polymer films used as packaging materials and made e.g. of polyolefins, such as polyethylene, or of oriented polypropylene, or of polyesters, e.g. polyethylene terephthalate, generally have relatively high oxygen permeability when they are used in uncoated form. Various measures have therefore been proposed for increasing the oxygen-barrier properties of these packaging materials.

It was an object of the present invention to provide an easy-to-formulate gas barrier-coating composition based on polymer emulsions as binder resin comprising phyllosilicates as functional filler. The formulation should preferably be a storage-stable, 1K system which is film-forming at ambient or slightly elevated temperature without the need of adding external crosslinker and/or the need to cure the coating at elevated temperatures (e.g. ≥ 80°C).
Addition of external crosslinker, i.e. formulation of a 2K system results in a limited application window due to pot-life issues. High curing temperatures may interfere with the plastic substrate where the coating is applied onto being too close to its softening point. The resulting coatings should provide excellent barrier against oxygen - even at high relative humidity - as well as against water vapor.

Gas barrier compositions designed to impede permeation of oxygen and/or water vapor employing conventional polymer emulsion binders and comprising clay as functional filler are principally known in literature but suffer from several drawbacks which make them no solution to the problem outlined above. More precisely, none of the authors deals with the importance of using a polymer emulsion with low background-salt as determined by measurement of its electrical conductivity which we now have found to be crucial for improved, excellent gas-barrier performance.

EP 2195390 (SUN Chem.) discloses a multi-component formulation comprising water-soluble silicate combined with a polymer emulsion and clay with the water-glass being the main constituent (>70 wt.% of total solids) for the preparation of oxygen barrier coatings on plastic substrates. Whereas a whole variety of different chemistries for the polymer emulsions is described (*inter alia* styrene-acrylic, acrylic copolymers and styrene-butadiene), no details on their salt content is given. Moreover, as shown in Table 2 formulations with emulsion polymers and clay, only, yield no barrier properties at all whereas silicate + clay, only, does. This finding is substantiated in Table 3 where somewhat more emulsion-rich formulations give inferior OTR values, even at increased clay loading. In conclusion, the use of polymer emulsions as single or substantial binder for barrier coatings is not recommended.

EP 2271491 (Meadwestvaco Corp.) describes that the original active compound providing barrier properties in formulations based on polymer emulsions and modified clay is the modifying agent lysine itself with the clay filler playing a minor role, only. As polymeric binders, dispersions based on modified styrene-butadiene, styrene-acrylate and vinyl-acrylic are employed in the working examples; no details, especially on their salt content are given.

In EP 2470718 (BASF SE), the use of styrene-acrylic as well as styrene-butadiene emulsion polymers for the preparation of water-vapor barrier coatings on cardboard or paper substrates is described, no details on their salt-content are disclosed. Even though clay loading is quite significant (50 wt.%), the reduction in WVTR is only limited (approx. 50% of blank).

WO 2015/173588 (Imerys Minerals Ltd.) describes the principal usefulness of polymer emulsions, e.g. styrene-butadiene or styrene-acrylic, as binder resins for clay-filled coatings as moisture barrier, especially under tropical conditions. No details, especially on the salt content of the employed polymer emulsions are given.

A whole series of publications from InMat Inc. deals with the use of formulations based on either elastic (Latex 2004, 19, 207-214; Polymer 2006, 47, 3083-3093; EP 991530; EP 1512552 and EP 1660575) or thermoplastic (US 8367193; EP 1660573; EP 1907488; EP 2066740; WO 2010/129028 and WO 2010/129032) polymer emulsions combined with clay fillers as barrier coatings. Although light is shed on many different aspects and, especially, a plentitude of chemistries for the binder resins is described - for example butyl rubber, polyisoprene, polyester, styrene-butadiene and acrylate - the important role of the emulsion binder's background-salt is not touched.

Also in scientific literature barrier coatings against oxygen and/or water vapor based on emulsion polymers and clay fillers have been treated, namely PTS research-report AIF15268 on www.ptspaper.de; Tappi Journal 2013, 14, 45-51; Polymer Chemistry 2013, 4, 4386-4395; Progress in Organic Coatings 2014, 77, 646-656. All of them employ either styrene-butadiene and/or (styrene-)acrylic dispersions as binder resins for their investigations but, again, none of the authors gives details on the salt content of the emulsion polymers used or describes its importance on barrier properties.
WO 2010/129028 describes aqueous barrier coating compositions comprising water, anionically functionalized matrix polymer, metal cation crosslinking agent and platy mineral filler. Polymers used in the examples are PVP and sulfopolyester. PVP is a water-soluble polymer. Sulfopolyester is a polymer made by polycondensation of polyalcohol and polyacid. WO 03/025058 describes aqueous ethylene/vinyl alcohol copolymer dispersions which may contain inorganic filler and give coating films with gas-barrier properties. Polymers used in the examples are ethylene/acrylic acid copolymer and ethylene/vinyl alcohol copolymer. The ethylene/acrylic acid copolymer is water-soluble. US 5,925,428 describes vapor barrier coatings for polymeric articles. The barrier layer comprises a metal polysilicate and layered inorganic silicate. The document does not describe aqueous polymer dispersions. Primer solutions are used in the examples. The primer solutions are polymer solutions and do not contain phyllosilicates.

It was an object of the present invention to provide further improved gas barrier compositions and processes which permit production of polymer films with good gas barrier properties, especially against oxygen and water vapor, without the need for crosslinkers and without the need for curing at elevated temperatures.

The invention provides an aqueous coating composition comprising
(a) at least one aqueous dispersion of a radically polymerized addition polymer, wherein the dispersed polymer is at least one polymer selected from the group consisting of acrylic copolymers, styrene-acrylic copolymers, vinyl-acrylic copolymers, styrene-butadiene copolymers, vinyl acetate copolymers, vinyl chloride copolymers and vinylidene chloride copolymers, and
(b) at least one phyllosilicate,
wherein the aqueous polymer dispersion has an electrical conductivity below 0.6 mS/cm, measured at a concentration of 2.5 wt.-% of solids and at 20°C.

The invention also provides the use of the aqueous composition for providing oxygen barrier properties, for example to a polymer film.

The invention also provides a polymer film, coated with an aqueous coating composition according to the invention. The invention also provides a coated polymer film comprising an oxygen barrier coating obtainable via the use according to the invention as described herein, wherein at least one side of the polymer film has been coated with the aqueous composition according to the invention.

The oxygen barrier properties can be measured by the permeability test described in the examples. The term oxygen-barrier property means that oxygen transmission rate (OTR) has been reduced in comparison with an uncoated substrate. The oxygen transmission rate of polymer films coated according to the invention is preferably less than 70%, in particular less than 50%, or less than 40%, e.g. from 10 to 30%, of the value for the uncoated polymer film measured at 25°C and 90% relative humidity.

The electrical conductivity is measured at a solids content of 2.5% of the respective polymer dispersion after dilution with deionized water and at a temperature of 20°C (see examples for details). The electrical conductivity of the polymer dispersion is below 0.6 mS/cm preferably lower than or equal 0.5 mS/cm, more preferably lower than or equal 0.3 mS/cm or lower than or equal 0.1 mS/cm.

The invention also provides a package comprising a polymer film according to the invention.

The invention also provides a method of forming a polymeric film with enhanced oxygen barrier properties comprising:
applying an aqueous composition according to the invention to at least one side of a polymer film and drying said composition to form a barrier coating on the polymer film.

The term "one-component composition" describes a composition which is not used in combination with a crosslinking agent which is typically added in the case of so-called two-component compositions shortly before their application on a coating substrate.

The amount of polymer (a) in the aqueous composition is preferably from 10 to 90 wt.%, more preferably from 20 to 90 wt.% and even more preferably from 50 to 85 wt.%, referring to solids content.

The amount of phyllosilicate (b) in the aqueous composition is preferably from 5 to 75 wt.%, more preferably from 5 to 50 wt.% or from 5 to 30 wt.%, most preferred from 10 to 30 wt.%, referring to solids content.

The weight ratio of the dispersed radically polymerized addition polymer (a) to phyllosilicate (b) is preferably from 95:5 to 50:50, more preferably from 95:5 to 60:40 and even more preferable from 90:10 to 70:30.

For the manufacture of radically polymerized polymer emulsions with low electrical conductivity there are two principal synthetic pathways, namely either via careful selection of processes and/or raw materials that avoid the use of salts or salt-generating species or, alternatively, by removing surplus ionic species in the aftermath as an additional step.

The aqueous dispersion of a radically polymerized addition polymer can be a primary polymer dispersion or it can be a secondary polymer dispersion. A secondary polymer dispersion is a polymer dispersion wherein the monomers have been polymerized in an organic solvent or in bulk, i.e. solvent-free and the resulting vinyl polymer is subsequently dispersed in water. A primary polymer dispersion is a polymer dispersion wherein the monomers have been polymerized directly in water by emulsion or suspension polymerization. Primary polymer dispersions typically contain a relative high amount of ionic compounds which lead to a relative high electrical conductivity. Compounds of this kind are, for example, ionic emulsifiers, ionic constituents of initiator systems (e.g. sodium hydrogensulfate from persulfate), or other ionic secondary products which are formed while the emulsion polymerization is being carried out.

Therefore, it may be necessary to reduce the amount of ionic components in the polymer dispersion. Methods of removing water-soluble ionic compounds from water are known. Suitable methods for removing ionic compounds from aqueous polymer dispersions are described in WO 2005/047342. The ionic compounds may be removed for example by treating the polymer dispersion with an ion exchanger resin, by diafiltration or by dialysis. One suitable method, for example, is a method as described in EP-A-571 069. According to that method the aqueous polymer dispersion is treated with an ion exchanger resin. Preference is given to using a mixture of an anionic and of a cationic exchanger resin, in order to catch both kinds of ions. An example of another suitable method is that of dialysis. In dialysis the polymer particles are retained by semipermeable membranes, while the water-soluble ionic compounds diffuse through the membrane. Continual supply of salt-free, deionized water maintains a concentration gradient. Dialysis devices are available commercially. In diafiltration, which is likewise suitable for removing the ionic compounds, water under overpressure is passed through the dispersion. After passing through a membrane which is impervious to the dispersion particles, the water, which contains the water-soluble ionic compounds, is removed.

The glass transition temperature Tg of the radically polymerized addition polymers is preferably in the region of below 50°C and more preferably in the range from -30 to +30°C. Glass transition temperatures are determined by Differential Scanning Calorimetrie (ASTM D 3418-08, "midpoint temperature" of second heating curve, heating rate 20°C/min). In case of a so-called "multiphase polymer" consisting of a least two chemically different vinyl (co-)polymers the Tg of at least one phase obeys the conditions outlined above.

The average size of the polymer particles dispersed in the aqueous dispersion is preferably less than 400 nm, more particularly less than 300 nm. With particular preference the average particle size is between 60 and 250 nm. By average particle size here is meant "volume median" corresponding to the d₅₀ of the particle size distribution - that is 50 vol.-% of the entire volume of all the particles have a diameter smaller than the volume median. The particle size distribution can be determined by hydrodynamic fractionation (see examples).

The radically polymerized addition polymers are obtainable via free-radically initiated polymerization from one or more ethylenically unsaturated, free-radically polymerizable monomers in the presence or absence of a chain transfer agent composition.

The radically polymerized addition polymer is at least one polymer selected from the group consisting of acrylic copolymers, styrene-acrylic copolymers, vinyl-acrylic copolymers, styrene-butadiene copolymers, vinyl acetate copolymers (such as for example ethylene-vinyl acetate copolymers), vinyl chloride copolymers and vinylidene chloride copolymers.

The radically polymerized addition polymer is preferably obtainable via free-radically initiated polymerization from one or more ethylenically unsaturated, free-radically polymerizable monomers selected from the group consisting of vinylaromatic compounds, conjugated aliphatic dienes, ethylenically unsaturated acids, ethylenically unsaturated carboxamides, ethylenically unsaturated carbonitriles, vinyl esters of saturated C₁ to C₂₀ carboxylic acids, esters of acrylic acid or methacrylic acid with monohydric C₁ to C₂₀ alcohols, allyl esters of saturated carboxylic acids, vinyl ethers, vinyl ketones, dialkyl esters of ethylenically unsaturated dicarboxylic acids, N-vinylpyrrolidone, N-vinylpyrrolidine, N-vinylformamide, N,N-dialkylaminoalkyl acrylamides, N,N-dialkylaminoalkyl methacrylamides, N,N-dialkylaminoalkyl acrylates, N,N-dialkylaminoalkyl methacrylates, vinyl halides, aliphatic hydrocarbons having 2 to 8 carbon atoms and one or two double bonds, or mixtures thereof.

The polymer consists to an extent which is preferably at least 40% by weight, more preferably at least 60% by weight and even more preferably at least 80% or at least 90% by weight of so-called principal monomers. Principal monomers are selected from C1-C20 alkyl (meth)acrylates, vinyl esters of carboxylic acids comprising up to 20 carbon atoms, vinylaromatics having up to 20 carbon atoms, ethylenically unsaturated nitriles, vinyl halides, vinyl ethers of alcohols comprising 1 to 10 carbon atoms, aliphatic hydrocarbons having 2 to 8 carbon atoms and one or two double bonds, or mixtures thereof.

Examples include alkyl (meth)acrylates having a C1-C10 alkyl moiety, such as methyl methacrylate, methyl acrylate, n-butyl acrylate, ethyl acrylate and 2-ethylhexyl acrylate. Mixtures of alkyl (meth)acrylates are also suitable in particular. Vinyl esters of carboxylic acids having 1 to 20 carbon atoms include, for example, vinyl laurate, vinyl stearate, vinyl propionate, vinyl versatate and vinyl acetate. Useful vinylaromatic compounds include vinyltoluene, α-methylstyrene, p-methylstyrene, α-butylstyrene, 4-n-butylstyrene, 4-n-decylstyrene and preferably styrene. Examples of nitriles are acrylonitrile and methacrylonitrile. Vinyl halides are chlorine-, fluorine- or bromine-substituted ethylenically unsaturated compounds, preferably vinyl chloride and vinylidene chloride. Specific examples of vinyl ethers are vinyl methyl ether and vinyl isobutyl ether. Preference is given to vinyl ethers of alcohols comprising 1 to 4 carbon atoms. Specific examples of hydrocarbons having 2 to 8 carbon atoms and one or two olefinic double bonds are ethylene, propylene, butadiene, isoprene and chloroprene.

Preferred principal monomers are the alkyl acrylates and alkyl methacrylates with 1 to 10 carbon atoms, especially 1 to 8 carbon atoms, in the alkyl group (the polymers thereof are also referred to as acrylic copolymers); vinylaromatics, especially styrene, and mixtures of the (meth)acrylates and styrene (the polymers thereof are also referred to as styrene-acrylic copolymers); hydrocarbons having 2 double bonds, more particularly butadiene, or mixtures of such hydrocarbons with vinylaromatics, more particularly styrene (the polymers thereof are also referred to as styrene-butadiene copolymers); hydrocarbons having one double bonds, more particularly ethylene, and mixtures of such hydrocarbons with vinyl esters of carboxylic acids having 1 to 20 carbon atoms, more particularly vinyl acetate (the polymers thereof are also referred to as ethylene-vinyl acetate copolymers). In the case of polybutadiene binders, the weight ratio of butadiene to vinylaromatics (more particularly styrene) can be for example between 10:90 to 90:10, more particularly 20:80 to 80:20.

Very particular preference is given to methyl acrylate, methyl methacrylate, ethyl acrylate, n-butyl acrylate, n-hexyl acrylate, octyl acrylate, 2-ethylhexyl acrylate, styrene, butadiene and mixtures of these monomers.

In addition to the principal monomers, the polymer may comprise further monomers, for example monomers having carboxylic acid, sulfonic acid or phosphonic acid groups. Preference is given to carboxylic acid groups. Specific examples are acrylic acid, methacrylic acid, itaconic acid, maleic acid or fumaric acid and aconitic acid. The level of ethylenically unsaturated acids in the polymer is generally below or equal to 10% by weight, for example from 0.1 % to 10% by weight or from 0,2 to 5% by weight. Further monomers include, for example monomers containing hydroxyl groups, more particularly hydroxyalkyl (meth)acrylates with 1 to 10 C-Atoms in the alkyl group; and amides such as for example (meth)acrylamide. Additional further monomers that may be mentioned include phenyloxyethyl glycol mono(meth)acrylate, glycidyl acrylate, glycidyl methacrylate, and aminoalkyl (meth)acrylates with 1 to 10 C-Atoms in the alkyl group such as for example 2-aminoethyl (meth)acrylate. As further monomers mention may also be made of crosslinking monomers.

In particular the polymer is synthesized from at least 60% by weight, more preferably at least 80% by weight, and very preferably at least 95% by weight of at least one alkyl (meth)acrylate with 1 to 20 C-atoms in the alkyl group.

Suitable radically polymerized addition polymers are for example constructed from butadiene or from mixtures of butadiene and styrene to an extent of at least 60% by weight; or from alkyl (meth)acrylates with 1 to 20 C-atoms in the alkyl group or mixtures thereof with styrene to an extent of at least 60% by weight.

Preferred polymers are
(i) copolymers from (a1) 19.8 to 80 parts by weight of at least one vinylaromatic compound, preferably styrene or methylstyrene, (a2) 19.8 to 80 parts by weight of at least one conjugated aliphatic diene, preferably butadiene, (a3) 0.1 to 10 parts by weight of at least one ethylenically unsaturated acid, preferably acrylic acid and/or methacrylic acid, and (a4) 0 to 20 parts by weight of at least one other monoethylenically unsaturated monomer different from (a1) to (a3), wherein the parts by weight of monomers (a1) to (a4) sum to 100;
(ii) copolymers from (b1) 19.8 to 80 parts by weight of at least one vinylaromatic compound, preferably styrene or methylstyrene, (b2) 19.8 to 80 parts by weight of at least one acrylate monomer selected from alkyl acrylates and alkyl methacrylates with 1 to 10 C-atoms in the alkyl group, preferably methyl acrylate, ethyl acrylate, n-butyl acrylate, ethylhexyl acrylate, propylheptyl acrylate or their mixture, (b3) 0.1 to 10 parts by weight of at least one ethylenically unsaturated acid, preferably acrylic acid and/or methacrylic acid, and (b4) 0 to 20 parts by weight of at least one other monoethylenically unsaturated monomer different from (b1) to (b3), wherein the parts by weight of monomers (b1) to (b4) sum to 100;
(iii) copolymers from vinyl acetate and at least one (meth)acrylate monomer selected from alkyl acrylates and alkyl methacrylates with 1 to 10 C-atoms in the alkyl group;
(iv) ethylene-vinyl acetate copolymers; and
(v) acrylate copolymers made more than or equal 80 parts by weight, preferably at least 90 parts by weight of at least one acrylate monomer selected from alkyl acrylates and alkyl methacrylates with 1 to 20 C-atoms in the alkyl group, preferably methyl acrylate, ethyl acrylate, n-butyl acrylate, ethylhexyl acrylate, propylheptyl acrylate or their mixture and no or less than or equal 15 parts by weight of at least one further monomer, different from the acrylate monomer.

Further preferred radically polymerized addition polymers are polymers prepared using as monomers
(A1) 19.8 to 80 parts by weight, preferably 25 to 70 parts by weight, of at least one vinylaromatic compound, especially styrene,
(B1) 19.8 to 80 parts by weight, preferably 25 to 70 parts by weight, of at least one conjugated aliphatic diene, especially butadiene,
(C1) 0.1 to 15 parts by weight of at least one ethylenically unsaturated acid, especially (meth)acrylic acid and/or itaconic acid, and
(D1) 0 to 20 parts by weight, preferably 0.1 to 15 parts by weight, of at least one further monoethylenically unsaturated monomer other than said monomers (A1) to (C1),
wherein the parts by weight of monomers (A1) to (D1) sum to 100.

Further preferred radically polymerized addition polymers are polymers prepared using as monomers
(A2) 19.8 to 80 parts by weight, preferably 25 to 70 parts by weight, of at least one vinylaromatic compound, especially styrene,
(B2) 19.8 to 80 parts by weight, preferably 25 to 70 parts by weight, of at least one monomer selected from alkyl esters of acrylic acid and alkyl esters of methacrylic acid with 1 to 18 C-atoms in the alkyl group,
(C2) 0.1 to 15 parts by weight of at least one ethylenically unsaturated acid, especially (meth)acrylic acid and/or itaconic acid, and
(D2) 0 to 20 parts by weight, preferably 0.1 to 15 parts by weight, of at least one further monoethylenically unsaturated monomer other than said monomers (A2) to (C2),
wherein the parts by weight of monomers (A2) to (D2) sum to 100.

The monomers of groups (A1) and (A2) are vinylaromatic compounds, for example styrene, α-methylstyrene and/or vinyltoluene and their mixture. Of this group of monomers, styrene is preferred. 100 parts by weight of total monomer mixtures used in the polymerization comprise for example from 19.8 to 80 parts by weight and preferably from 25 to 70 parts by weight of at least one monomer of group (A1) or (A2).

Examples of monomers of group (B1) are 1,3-butadiene, isoprene, 1,3-pentadiene, dimethyl 1,3-butadiene and cyclopentadiene. Of this group of monomers, 1,3-butadiene and/or isoprene are preferred. 100 parts by weight of monomer mixtures used altogether in the emulsion polymerization comprise for example from 19.8 to 80 parts by weight, preferably from 25 to 70 parts by weight and especially from 25 to 60 parts by weight of at least one monomer of group (B1).

Examples of monomers of groups (C1) and (C2) are ethylenically unsaturated carboxylic acids, ethylenically unsaturated sulfonic acids and vinylphosphonic acids and salts thereof. Ethylenically unsaturated carboxylic acids used are preferably α,β-monoethylenically unsaturated mono- and dicarboxylic acids having 3 to 6 carbon atoms in the molecule. Examples thereof are acrylic acid, methacrylic acid, itaconic acid, maleic acid, fumaric acid, crotonic acid, vinylacetic acid and vinyllactic acid. Useful ethylenically unsaturated sulfonic acids include for example vinylsulfonic acid, styrenesulfonic acid, acrylamidomethylpropanesulfonic acid, sulfopropyl acrylate and sulfopropyl methacrylate. Particular preference is given to acrylic acid and methacrylic acid, especially acrylic acid. The group of (C1) and (C2) monomers comprising acid groups may be used in the polymerization as free acids and also after partial or complete neutralization with suitable bases. Aqueous sodium hydroxide solution, aqueous potassium hydroxide solution or ammonia is preferably used as neutralizing agent. 100 parts by weight of monomer mixtures used in the polymerization comprise for example from 0.1 to 15 parts by weight, preferably from 0.1 to 10 parts by weight or from 1 to 8 parts by weight of at least one monomer of group (C1)/(C2).

Useful monomers of group (B2) include esters of acrylic aid and methacrylic acid with monohydrate C₁ to C₁₈ alcohols such as methyl acrylate, methyl methacrylate, ethyl acrylate, ethyl methacrylate, n-propyl acrylate, n-propyl methacrylate, isopropyl acrylate, isopropyl methacrylate, n-butyl acrylate, n-butyl methacrylate, isobutyl acrylate, isobutyl methacrylate, sec-butyl acrylate, sec-butyl methacrylate, tert-butyl acrylate, tert-butyl methacrylate, pentyl acrylates, pentyl methacrylates, 2-ethylhexyl acrylate, 2-ethylhexyl methacrylate. 100 parts by weight of total monomer mixtures used in the polymerization comprise for example from 19.8 to 80 parts by weight and preferably from 25 to 70 parts by weight of at least one monomer of group (B2).

Monomers of group (D2) are other monoethylenically unsaturated compounds. Examples thereof are ethylenically unsaturated carboxamides such as more particularly acrylamide and methacrylamide, ethylenically unsaturated carbonitriles such as more particularly acrylonitrile and methacrylonitrile, vinyl esters of saturated C₁ to C₁₈ carboxylic acids, preferably vinyl acetate, allyl esters of saturated carboxylic acids, vinyl ethers, vinyl ketones, dialkyl esters of ethylenically unsaturated dicarboxylic acids, N-vinylpyrrolidone, N-vinylpyrrolidine, N-vinylformamide, N,N-dialkylaminoalkylacrylamides, N,N-dialkylaminoalkylmethacrylamides, N,N-dialkylaminoalkyl acrylates, N,N-dialkylaminoalkyl methacrylates, vinyl chloride and vinylidene chloride. Useful monomers of group (D1) include the monomers of group (D2) and also esters of acrylic acid and of methacrylic acid with monohydric C₁ to C₁₈ alcohols such as methyl acrylate, methyl methacrylate, ethyl acrylate, ethyl methacrylate, n-propyl acrylate, n-propyl methacrylate, isopropyl acrylate, isopropyl methacrylate, n-butyl acrylate, n-butyl methacrylate, isobutyl acrylate, isobutyl methacrylate, sec-butyl acrylate, sec-butyl methacrylate, tert-butyl acrylate, tert-butyl methacrylate, pentyl acrylates, pentyl methacrylates, 2-ethylhexyl acrylate, 2-ethylhexyl methacrylate. This group of monomers is optionally used to modify the polymers. 100 parts by weight of monomer mixtures used in the emulsion polymerization comprise for example from 0 to 20 parts by weight or from 0.1 to 15 parts by weight and especially from 0.5 to 10 parts by weight of at least one monomer of group (D1) or (D2).

In one embodiment of the present invention, the further monomers (D1) and (D2) are each used in amounts of 0.1 to 15 parts by weight; the vinylaromatic compound is selected from styrene, methylstyrene and their mixture; the conjugated aliphatic diene is selected from 1,3-butadiene, isoprene and their mixture; and the ethylenically unsaturated acid is selected from one or more compounds of the group consisting of acrylic acid, methacrylic acid, itaconic acid, maleic acid, fumaric acid, crotonic acid, vinylacetic acid, vinyllactic acid, vinylsulfonic acid, styrenesulfonic acid, acrylamidomethylpropanesulfonic acid, sulfopropyl acrylate, sulfopropyl methacrylate, vinylphosphonic acid and salts thereof.

The emulsion polymerization typically uses initiators that form free radicals under the reaction conditions. Initiators are used for example in amounts up to 2% by weight, preferably at not less than 0.9% by weight, for example in the range from 1.0% to 1.5% by weight, based on the monomers to be polymerized. Suitable polymerization initiators include, for example, peroxides, hydroperoxides, hydrogen peroxide, sodium persulfate, potassium persulfate, redox catalysts and azo compounds such as 2,2-azobis(4-methoxy-2,4-dimethylvaleronitrile), 2,2-azobis(2,4-dimethylvaleronitrile) and 2,2-azobis(2-amidinopropane) dihydrochloride. Examples of further suitable initiators are dibenzoyl peroxide, tert-butyl perpivalate, tert-butyl per-2-ethylhexanoate, di-tert-butyl peroxide, diamyl peroxide, dioctanoyl peroxide, didecanoyl peroxide, dilauroyl peroxide, bis(o-tolyl) peroxide, succinyl peroxide, tert-butyl peracetate, tert-butyl permaleate, tert-butyl perisobutyrate, tert-butyl perpivalate, tert-butyl peroctoate, tert-butyl perbenzoate, tert-butyl hydroperoxide, azobisisobutyronitrile, 2,2'-azobis(2-methylbutyronitrile), 2,2'-azobis(2,4-dimethylvaleronitrile) and 2,2'-azobis(N,N'-dimethyleneisobutyroamidine) dihydrochloride. Initiators are preferably selected from the group consisting of peroxodisulfates, peroxosulfates, azo initiators, organic peroxides, organic hydroperoxides and hydrogen peroxide. Particular preference is given to using water-soluble initiators, for example sodium persulfate, potassium persulfate, ammonium persulfate, sodium peroxodisulfate, potassium peroxodisulfate and/or ammonium peroxodisulfate. The polymerization can also be initiated by means of high-energy rays such as electron beams or irradiation with UV light.

The amount of chain transfer agents is for example in the range from 0.01% to 5% and preferably in the range from 0.1 % to 1 % by weight, based on the monomers used in the polymerization. The chain transfer agents are preferably added together with the monomers. However, they can also be partly or wholly present in the initial charge. They can also be added in stages at different times to the monomers.

To augment the dispersal of the monomers in the aqueous medium, the protective colloids and/or emulsifiers customarily used as dispersants can be used. A detailed description of suitable protective colloids is given in Houben-Weyl, Methoden der organischen Chemie, volume XIV/1, Makromolekulare Stoffe, Georg-Thieme-Verlag, Stuttgart, 1961, pages 411 to 420. Suitable emulsifiers include surface-active substances whose number average molecular weight is typically below 2000 g/mol or preferably below 1500 g/mol, while the number average molecular weight of the protective colloids is above 2000 g/mol, for example in the range from 2000 to 100 000 g/mol and more particularly in the range from 5000 to 50 000 g/mol. Suitable emulsifiers include, for example, ethoxylated C₈ to C₃₆ fatty alcohols having a degree of ethoxylation in the range from 3 to 50, ethoxylated mono-, di- and tri-C₄-C₁₂-alkylphenols having a degree of ethoxylation in the range from 3 to 50, alkali metal salts of dialkyl esters of sulfosuccinic acid, alkali metal and ammonium salts of C₈ to C₁₂ alkyl sulfates, alkali metal and ammonium salts of C₁₂ to C₁₈ alkylsulfonic acids and alkali metal and ammonium salts of C₉ to C₁₈ alkylarylsulfonic acids. Cation-active emulsifiers are, for example, compounds having at least one amino or ammonium group and at least one C₈ to C₂₂ alkyl group. When emulsifiers and/or protective colloids are used as auxiliaries to disperse the monomers, the amounts used thereof are for example in the range from 0.1 % to 5% by weight, based on the monomers.

Useful protective colloids include for example degraded starch, especially maltodextrin. Useful starting starches for preparing the degraded starches include all native starches such as starches from maize (corn), wheat, oats, barley, rice, millet, potatoes, peas, tapioca, sorghum or sago. Also of interest are those natural starches which have a high amylopectin content such as wax maize starch and wax potato starch. The amylopectin content of these starches is above 90%, usually in the range from 95 to 100%. Starches modified chemically by etherification or esterification can also be used for preparing the polymer dispersions of the present invention. Such products are known and commercially available. They are prepared for example by esterification of native starch or degraded native starch with inorganic or organic acids, their anhydrides or chlorides. Of particular interest are phosphated and acetylated degraded starches. The most common method to etherify starches consists in treating starch with organic halogen compounds, epoxides or sulfates in aqueous alkaline solution. Known starch ethers are alkyl ethers, hydroxyalkyl ethers, carboxyalkyl ethers and allyl ethers. The reaction products of starches with 2,3-epoxypropyltrimethylammonium chloride are also useful. Particular preference is given to degraded native starches, more particularly native starches degraded to maltodextrin. Further suitable starches include cationically modified starches, i.e., starch compounds having amino groups or ammonium groups. The degraded starches have for example an intrinsic viscosity ηᵢ of less than 0.07 dl/g or less than 0.05 dl/g. The intrinsic viscosity ηᵢ of the degraded starches is preferably in the range from 0.02 to 0.06 dl/g. The intrinsic viscosity ηᵢ is determined in accordance with DIN EN1628 at a temperature of 23°C.

In one embodiment of the present invention, the emulsion polymerization is carried out in the presence of seed particles. The initial charge then comprises polymer seed, especially a polystyrene seed, i.e., an aqueous dispersion of finely divided polymer, preferably polystyrene, having a particle diameter of 20 to 40 nm.

The emulsion polymerization takes place in an aqueous medium. The aqueous medium may comprise for example completely ion-free water or else mixtures of water and a miscible solvent such as methanol, ethanol or tetrahydrofuran. As soon as the particular polymerization temperature desired is reached or within the time span of 1 to 15 minutes, preferably 5 to 15 minutes after reaching the polymerization temperature, the metered addition of the monomers is commenced. They can be for example pumped into the reactor continuously within for example 60 minutes to 10 hours, usually within 2 to 4 hours. Preferably, the reaction mixture in the initial charge is heated to the requisite temperature at which the polymerization proceeds. These temperatures are for example from 80 to 130°C and preferably from 85 to 120°C. The polymerization can also be carried out under superatmospheric pressure, for example at pressures up to 15 bar, e.g., at 2 to 10 bar. Monomer addition can take the form of a batch, continuous or staged operation.

After the polymerization has ended, further initiator may optionally be added to the reaction mixture and a postpolymerization performed at the same temperature as the main polymerization or else at a lower or higher temperature. To complete the polymerization reaction, it will in most cases suffice to stir the reaction mixture at the polymerization temperature for example 1 to 3 hours after addition of all the monomers. The pH in the polymerization can be for example in the range from 1 to 5. After polymerization, the pH is preferably adjusted to a value of between 6 and 7 for example.

Further aqueous coating compositions of the invention are compositions comprising a secondary polymer dispersion. The term "secondary dispersion" refers to those aqueous dispersions which are first polymerized in an homogenous organic medium and thereafter are redispersed in an aqueous medium with neutralization, generally without the addition of external emulsifiers.

The preparation of the secondary dispersion polymer can in principle be carried out by means of conventional free- radical polymerization processes in organic phase. The polymer (P) is preferably prepared in a multi-stage operation of the kind already described in EP-A 0 947 557 (p. 31.2 - p. 41.15) or in EP-A 1 024 184 (P. 21.53-p. 41.9). In this operation first a hydrophobic monomer mixture, free from acid groups or with a low acid group content, is metered in, and then, at a later point in time in the polymerization, a more hydrophilic monomer mixture, containing acid groups, is metered in.

The copolymerization is carried out preferably at 40 to 180 °C, more preferably at 80 to 160 °C. Suitable initiators (I) for the polymerization reaction include organic peroxides such as di-tert-butyl peroxide, for example, or tert-butyl peroxy-2-ethylhexanoate and azo compounds. The initiator quantities employed depend on the desired molecular weight. For reasons of operational reliability and of greater ease of handling it is also possible to use peroxide initiators in the form of a solution in suitable organic solvents of the type already specified. The rate of addition of the initiator (I) in the process of the invention may be controlled such that it lasts until the end of the monomer feed (M).

The free-radical polymerization can be carried out without solvent or in the presence of an organic solvent or an organic solvent/water mixture which is charged to the reaction vessel. Organic solvents can be used in amounts of preferably 0 to 75%, more preferably 0 to 30% or 5 to 20% by weight, based on the weight amount of monomers. In one embodiment the organic solvent quantities are preferably chosen so as to result in an organic solvent content of 0% to 5 or less % by weight, preferably 0.1% to 5 or less % by weight in the final aqueous dispersion. The polymerization of the secondary dispersion polymers is preferably done in organic solvents and excluding water. Suitable organic solvents include any solvents that are known in binder technology, preference being given to those which are typically used as cosolvents in aqueous dispersions. Examples of organic solvents are alcohols, ethers, alcohols containing ether groups, esters, ketones, N-methylpyrrolidon, non-polar hydrocarbons, or mixtures of these solvents. It is further possible to prepare the copolymer by the process of EP-A 1 024 184, using a hydrophobic copolymer as the initial charge. Instead of a multi-stage polymerization process it is likewise possible to carry out the process of the invention continuously (gradient polymerization), i.e. a monomer mixture is added with a changing composition, the hydrophilic (acid-functional) monomer fractions being higher towards the end of the feed than at the beginning.

The number-average molecular weight Mn of the secondary dispersion copolymers (P) can be controlled through a specific choice of the operating parameters, such as of the molar monomer/initiator ratio, for example, of the reaction time or of the temperature, and is situated in general at between 500 g/mol and 30 000 g/mol, preferably between 10000 g/mol and 30 000 g/mol.

Before, during or after the dispersion of the copolymers (P) in water, the acid groups present are converted at least proportionally into their salt form by addition of suitable neutralizing agents. Suitable neutralizing agents are organic amines or water-soluble inorganic bases, such as soluble metal hydroxides, metal carbonates or metal hydrogen carbonates, for example, such as sodium hydroxide or potassium hydroxide, for example. Examples of suitable amines are butyldiethanolamine, N-methylmorpholine, triethylamine, ethyldiisopropylamine, N,N-dimethylethanolamine, N,N-dimethyl-isopropanolamine, N- methyldiethanolamine, diethylethanolamine, triethanolamine, butanolamine, morpholine, 2- aminomethyl-2-methylpropanol or isophoronediamine. In mixtures it is also possible, proportionally, to use ammonia. Particularly preferred are triethanolamine, N,N-dimethylethanolamine and ethyldiisopropylamine. The neutralizing agents are added in amounts such that in total the theoretical degree of neutralization of the acid groups is from 40% to 150%, preferably 60% to 120%. The degree of neutralization here is the ratio of added basic groups of the neutralizing component to acid functions of the copolymer. The pH of the aqueous polymer dispersion of the invention is preferably 6 to 10, more preferably 6.5 to 9.

The content of solids in the polymer dispersion is preferably in a range of from 10 or more weight-% to 90 or less weight-%, preferably from 40 weight-% to 60 weight-%, based on the total weight of the dispersion.

The organic solvents are present in an amount of preferably less than 5 weight-%, more preferably less than 4 weight-%, more preferred less than 2 weight-%, based on the total weight of the aqueous dispersion. The solids contents are determined as specified in DIN-EN ISO 3251. Organic solvents to be reduced or avoided include acetone and other solvents with boiling points under 100 °C.

The aqueous coating composition preferably is a one-component composition which does not contain a crosslinker for the polymer, especially no isocyanate crosslinker.

The aqueous composition contains at least one phyllosilicate. Phyllosilicates are a subgroup of silicate minerals. Phyllosilicates are sheet silicate materials (layered silicates), formed by parallel sheets of silicate tetrahedra with Si₂O₅ or a 2:5 ratio. The tetrahedral layers alternate with octahedron layers. In the octahedral layers are cations surrounded by hydroxide ions and / or oxygen in octahedral coordination. The actual layers themselves are usually charged negatively and the charges are partially offset by additional cations in the interstices of the respective layers. These additional cations are to be distinguished from the foregoing cations in the octahedral layers. Many phyllosilicates may be well swollen in water and / or dispersed. This process is called exfoliation (or synonymously delamination).

The phyllosilicate may be natural or synthetic. They have an aspect ratio of preferably at least 50, more preferably more than 400, or more than 1000 and most preferably more than 10000. The mode of barrier action of phyllosilicates is due to their high aspect ratio (ratio of width to thickness). The starting clay materials are layered structures which can be exfoliation and delaminated in a known manner which - in an idealized case - leads to individual platelets with thicknesses of preferably greater or equal 10nm, ideally about 1 nm corresponding to a single clay layer.

The layer charge is preferably from 0.01 to 2.0 per formula unit, preferably from 0.3 to 0.95 and ideally from 0.4 to 0.6.

The phyllosilicates may be modified or unmodified. Preference is given to modified phyllosilicates.

The phyllosilicates may be selected from montmorillonite, bentonite, kaolinite, mica, hectorite, fluorohectorite, saponite, beidellite, nontronite, stevensite, vermiculite, fluorovermiculite, halloysite, volkonskoite, suconite, magadite, sauconite, stibensite, stipulgites, attapulgites, illites, kenyaite, smectite, allevardite, muscovite, palygorskite, sepiolite, silinait, grumantite, revdite, zeolites, fuller's earth, natural or synthetic talc and mica, or of synthetic origin, such as permutites. Most preferred are exfoliated, organically modified smectites.

These phyllosilicates are composed of packets of face to face stacking of individual silicate layers or sheets. The thickness of the sheets is typically about 1 nm and the longest length of the sheets is typically from 50 to 1000 nm or even longer, resulting in aspect ratios of 50 to 1000. As described by Breu et al. (Nanoscale 2012, 4, 5633-5639), aspect ratios of more than 10000 can be realized for synthetic clays.

Preferred are montmorillonite (aluminium magnesium silicate), hectorite (magnesium lithium silicate) clays, with synthetic fluorohectorite being the most preferred. Also preferred are exfoliated smectite types.

Preferred synthetic phyllosilicates are synthetic smectites. Preferred synthetic smectites are those of the formula

[M_{n/valency}]^{inter} [M^{I}ₘ M^{II}ₒ]^{oct} [Si₄]^{tet} O₁₀ Y₂,

wherein
M are metal cations of oxidation state 1 to 3, or H⁺,
M' metal cations of oxidation state 2 or 3,
M^{II} are metal cations of oxidation state 1 or 2,
Y are mono-anions,
m for metal atoms M^{I} of oxidation state 3 is ≦2.0
and m for metal atoms M^{I} of oxidation state 2 is ≦3.0,
o is ≦1.0 and
the layer charge n is from 0.01 to 2.0 , preferably from 0.3 to 0.95 and ideally from 0.4 to 0.6.

M preferably has oxidation state 1 or 2. M is particularly preferably Li⁺, Na⁺, Mg²⁺, or a mixture of two or more of those ions. M is most particularly preferably Na⁺ or Li⁺.
M^{I} is preferably Mg²⁺, Al³⁺, Zn²⁺, Fe²⁺, Fe³⁺ or a mixture of two or more of those ions.
M" is preferably Li⁺, Mg²⁺ or a mixture of those cations.
Y is preferably OH⁻ or F⁻, particularly preferably F⁻.

According to a particularly preferred embodiment of the invention, M is Li⁺, Na⁺, H⁺ or a mixture of two or more of those ions, M^{I} is Mg²⁺, M" is Li⁺, and Y is F⁻.

A synthesis procedure of suitable synthetic layered silicates is described in M. Stoter et al., Langmuir 2013, 29, 1280-1285. A method for producing suitable and preferred phyllosilicates having high aspect ratios is described in WO 2011/089089. Synthetic phyllosilicates may be prepared by high-temperature melt synthesis, followed by exfoliation and/or delamination to give phyllosilicate platelets having a high aspect ratio, e.g. as described in WO 2011/089089 or in WO 2012/175431. By means of this process it is possible to obtain phyllosilicate platelets having an average aspect ratio greater than 400. A further advantage of the phyllosilicate platelets obtainable by this process is that, unlike natural montmorillonites and vermiculites, which are more or less yellowish-brown in colour, they are colourless. This allows colourless composite materials to be produced therefrom.

Suitable phyllosilicates may also be produced hydrothermally, for example hydrothermally produced smectite such as Optigel® SH. It is well known to produce hectorite synthetically via hydrothermal processing. For example, U.S. Patent Nos. 3,954,943 and 3,586,478 teach the synthesis of fluorine containing hectorite by a hydrothermal process. WO 2014/164632 teaches suitable synthetic zinc hectorite via hydrothermal preparation.

Preferably, the phyllosilicates are surface-modified with at least one organic compound having at least one group selected from amino groups and ammonium groups. Different type of cationic modification can be used to replace metal cations (e.g. sodium cations) from the surface of the delaminated phyllosilicates. The surface modification can provide stabilization of the delaminated or exfoliated phyllosilicates and compatibilization with polymers (a) and (b).

Cationic modification means that an organic moiety has been strongly attached to the phyllosilicate by a treatment of subjecting the phyllosilicate to an ion exchange process whereby inorganic cations present in the phyllosilicate are replaced by organic cations comprising, but not limited to, either an organic group bonded to a cationic salt group, such as quaternary ammonium, phosphonium, pyridinium or the like, or an organic compound containing a cationic amine salt.

The phyllosilicates are made organophilic by ion-exchanging organic or polymeric molecules between the inorganic layers, e.g. according to a process as described in U.S. Pat. No. 5,578,672. By way of example, mention may be made of the organophilic clays described in U.S. Pat. No. 6,117,932. Preferably, the clay is modified with an organic substance by ionic bonding with an onium ion having preferably 4 carbon atoms or more. If the number of carbon atoms is less than 4, the organic onium ion might be too hydrophilic and therefore the compatibility with the polymer matrix may decrease. By way of example of organic onium ion, mention may be made of hexylammonium ions, octylammonium ions, 2-ethylhexylammonium ions, dodecylammonium ions, laurylammonium ions, octadecylammonium (stearylammonium) ions, dioctyldimethylammonium ions, trioctylammonium ions, distearyldimethylammonium ions, stearyltrimethylammonium ions and ammonium laurate ions. It is recommended to use a clay having the highest possible surface of contact with the polymer.

Other examples of organic onium ions or their precursors used for cationic modification may be selected from amino acids like glycine, alanine, lysine, ornithine or their derivatives; e.g. L-lysine monohydrochloride or N,N,N-trimethylglycine hydrochloride (= betaine); from amino alcohols like ethanol amine, N,N'-dimethyl ethanolamine, N,N'-dimethylamino ethoxyethanol, diethanol amine, triethanolamine, 2-amino-2-(hydroxymethyl)-1,3-propandiol (= TRIS); or from alkoxylated amines or amides like ethoxylated ethylene diamine (e.g. Mazeen® 184, Tetronic® 90R4, Tetronic ®904 or Tetronic® 1107), ethoxylated fatty amines (e.g. Lutensol® FA 12, Lutensol® FA 12K), ethoxylated fatty acid amides (e.g. Lutensol® FSA 10) or polyether amines like Jeffamine® M-600, M-1000, M-2005 or M-2070 from the Jeffamine® M-series or Polyamine D-230, D-400, D-2000, T-403 or T-5000 from BASF. Preferred modifiers are betaine, TRIS, lysine, alkoxylated ethylene diamines or ethoxylated fatty amines.

The cationic exchange capacity of the phyllosilicates is preferably from 50 and 200 milliequivalents per 100 g. The proportion of organic onium ion is advantageously from 0.3 to 3, preferably from 0.3 to 2 equivalents of the ion exchange capacity of the clay.

One embodiment of the invention is a polymer film coated with an aqueous composition as described above, in particular a polymer film comprising an oxygen barrier coating obtainable via the use of an aqueous composition as described above, wherein at least one side of the polymer film has been coated with an aqueous composition comprising (a) at least one aqueous dispersion of a radically polymerized addition polymer, and (b) at least one phyllosilicate,
wherein the aqueous polymer dispersion has an electrical conductivity below 0.6 mS/cm, measured at a concentration of 2.5 wt.-% of solids and at 20°C.

The oxygen transmission rate of the coated film is preferably less than 70% of the oxygen transmission rate of the uncoated film, measured at 25 °C and 90% relative humidity and more preferably less than 60%, or less than 50%, or less than 40% or preferably less than or equal to 30%, e.g. from 10 to 30% of the oxygen transmission rate of the uncoated film, measured at 25 °C and 90% relative humidity.

The aqueous composition used for the coating process can comprise further additives or auxiliaries, e.g. thickeners for adjusting rheology, wetting aids, or binders. Preferred polymer film substrates are polymer films which are suitable for packaging.

Preferred polymer films are made of oriented polypropylene or polyethylene, where the polyethylene can be produced from ethylene either by the high-pressure polymerization process or by the low-pressure polymerization process. Examples of other suitable polymer films are made of polyester, such as polyethylene terephthalate, and films made of polyamide, polystyrene and polyvinyl chloride. In one embodiment, the polymer film is biodegradable, e.g. made of biodegradable aliphatic-aromatic copolyesters and/or polylactic acid, an example being Ecoflex® films or Ecovio® films. Examples of suitable copolyesters are those formed from alkanediols, in particular C2 to C8 alkanediols, e.g. 1,4-butanediol, and from aliphatic dicarboxylic acids, in particular C2 to C8 dicarboxylic acids, e.g. adipic acid, and from aromatic dicarboxylic acids, e.g. terephthalic acid. Preferred polymer film materials are selected from polyethylene terephthalate, oriented polypropylene, casted polypropylene, polyethylene, biodegradable aliphatic-aromatic copolyesters, metalized polyethylene terephthalate, metalized oriented polypropylene and polyamide.

The thickness of the polymer film can be in the range from 5 to 200 µm, in the case of films made of polyamide from 5 to 50 µm, in the case of films made of polyethylene terephthalate from 10 to 100 µm, in case of oriented polypropylene form 10 to 100 µm, in the case of films of polyvinyl chloride about 100 µm, and in the case of films made of polystyrene about 30-75 µm.

Preferably, the oxygen barrier coating on the polymer film is pore-free, which can be analyzed by atomic force microscopy (AFM) or scanning electron microscope (SEM).

One object of the invention is a method of forming a polymeric film with enhanced oxygen barrier properties comprising:
- applying an aqueous composition according to the invention as described above to at least one side of the polymer film, and
- drying said composition to form a barrier coating on the polymer film.

The aqueous composition can be applied by typical coating machinery to a backing film made of a plastic. If materials in the form of webs are used, the aqueous composition is usually applied from a trough by way of an applicator roll and rendered uniform with the aid of an air knife. Other suitable possibilities for applying the coating use the reverse gravure process, or spray processes, or a spreader system that uses a roll, or other coating processes known to the person skilled in the art. The aqueous composition can also be applied in a multi-coating process, wherein a first coating is followed by a second or more coating.

Other suitable coating processes are the known intaglio printing and relief printing processes.

Instead of using different inks in the printing-ink units, the process here by way of example uses a printing process for application of the aqueous polymer solution. Printing processes that may be mentioned are the flexographic printing process as a relief printing process known to the person skilled in the art, the gravure process as an example of intaglio printing, and offset printing as an example of flatbed printing. Modern digital printing, inkjet printing, electrophotography and direct imaging can also be used.

In order to achieve a further improvement in adhesion on a polymer film, the backing film can be previously subjected to corona treatment. Examples of the amounts applied to the sheet materials are preferably from 0.2 to 50 g (polymer, solid) per m², preferably from 0.5 to 20 g/m² or from 1 to 15 g/m².

In order to achieve a further improvement in adhesion on a polymer film, a pre-coating or a primer can be applied on the polymer film before coating the oxygen barrier onto the substrate. Such primers can be based on polyurethane dispersions, polyurethane solutions, solvent-free or solvent based reactive polyurethane, polyethylene imine, polyacrylates or other primers known to the person skilled in the art.

Once the aqueous coating composition has been applied to the sheet substrates, the solvent / water is evaporated. For this, by way of example, in the case of continuous operation, the material can be passed through a drying tunnel, which can have an infrared irradiation apparatus. The coated and dried material is then passed over a cooling roll and finally wound up. The thickness of the dried coating is preferably from 0.2 to 50 µm, particularly preferably from 0.5 to 20 µm, most preferred from 0.7 to 5 µm.

The substrates coated with the aqueous coating composition exhibit excellent oxygen-barrier action, in particular in high humidity environments. The coated substrates can be used for example as means of packaging, preferably for packaging foods. The coatings have very good mechanical properties and exhibit, for example, an extraordinary flexibility.

The oxygen barrier coating can also be used as a barrier coating against other substances. Such substances can be carbon dioxide, nitrogen, bisphenol A (BPA), mineral oil, fat, aldehydes, grease, plasticizer, photoinitiators or aroma substances.

In order to obtain specific additional surface properties or specific coating properties of the coated polymer films, for example good printability, or further improved sealing and non-blocking properties, or good water-resistance, it can be advantageous to overcoat the coated substrates with topcoat layers which provide these desired additional properties. The substrates precoated with the aqueous coating composition according to the invention can readily be overcoated. For the overcoating process, one of the processes mentioned above can be repeated, or repeated coating can be carried out in a continuous process without any intervening wind-up and unwind of the foil. The location of the oxygen barrier layer can thus be in the interior of the system, and the surface properties are then determined by the topcoat layer. The topcoat layer has good adhesion to the oxygen-barrier layer. Due to the good humidity resistance, it is in particular not necessary to apply an additional moisture-protection coating to ensure that the oxygen-barrier layer is effective even at relatively high humidity levels.

In one embodiment, a polymer film of the invention comprises in addition to the oxygen barrier coating at least one additional layer made from materials selected from the group consisting of polyacrylates, polyvinylidene chloride (PVDC), waxes, epoxy resins, UV curable acrylates and polyurethanes.

In one embodiment of the invention a polymer film of the invention as described above is part of a laminate, for example it is laminated with at least one additional material. The at least one additional material is preferably selected from polyethylene terephthalate, oriented polypropylene, polyethylene, casted polypropylene, biodegradable aliphatic-aromatic copolyesters, metalized polyethylene terephthalate, metalized oriented polypropylene, polyamide, paper and board.

Another object of the invention is a package comprising a polymer film or a laminate according to the invention as described above.

Another object of the invention is the use of an aqueous composition according to the invention as described above for providing oxygen barrier properties.

### Examples

Determination of particle size
The particle size is determined by hydrodynamic fractionation (HDC) using a CHDF-3000 High Resolution Particle Sizer from Matec Instrument Companies. The Cartridge PL0850-1020 column type, filled with polystyrene beads, is used and is operated with a flow rate of about 1 ml/min. The filtered samples are diluted to an absorption of about 0.5 AU/µl with the eluent solution. The sample is eluted, through the size exclusion principle, in dependence of the hydrodynamic diameter. The eluent contains 0.2 g/L of dodecyl poly(ethylene glycol ether)23 (Brij® 35), 0.5 g/L of sodium dodecyl sulfate, 0.24 g/L of sodium dihydrogenphosphate, and 0,2 g/L by weight of sodium azide in deionized water. The pH is about 5.5 to 6. The elution time is calibrated using polystyrene calibration latices. Measurement takes place in the 20 nm to 1200 nm range. Detection is carried out using a UV detector at a wavelength of 254 nm.

### Determination of glass transition temperature:

The glass transition temperature is measured by means of differential scanning calorimetry in accordance with ASTM D 3418-08. For conditioning, the polymers are poured out, dried overnight, then dried at 120°C in a vacuum drying cabinet for 1 hour. At measurement, the sample is heated to 150°C, cooled rapidly, and then measured on heating at 20°C/min up to 150°C. The value reported is the mid point temperature.

### Measurement of oxygen-barrier action:

The determination method is based on ASTM D3985 - 05, using a coulometric sensor. Each sample is measured twice and the mean result is calculated. Oxygen transmission rate (OTR) is determined on coatings on polymer films at a relative humidity (RH) level of 75% or 90%, respectively, and at a temperature of 25 °C. Measurements are done with synthetic air (21 % oxygen); results are extrapolated for 100% oxygen. OTR are obtained on a Mocon OX-TRAN 2/21 XL instrument with a lower detection limit of 0.0005 cm³ m⁻² day⁻¹ bar⁻¹.

### Carrier material:

Polymer film of PET (polyethylene terephthalate) from Bleher Folientechnik (Ditzingen, Germany) with a thickness of 36 µm, one side corona treated.
OTR of the uncoated plastic film: 33 cm³ m⁻² day⁻¹ bar⁻¹.

### Measurement of conductivity of polymer dispersions:

In order to determine the conductivity and, thus, salt content of the polymer emulsions employed within these investigations, each dispersion was diluted with distilled water down to a solids content of 2.5% of the respective polymer dispersion. Then, at a temperature of 20°C the sample was gently stirred with the sensor probe until the reading remained constant. Measurements were performed on an electrical measuring transducer, model Cond 330i from WTW GmbH (Weilheim, Germany) utilizing a TetraCon® 325 sensor probe (cell constant: 0.475 cm⁻¹, working range: 1 µS/cm to 2 S/cm) from WTW GmbH. Before recording conductivity values, the device was calibrated against KCI standards (0.01 M and 0.1 M) and air. Each sample was measured twice and the mean result is calculated.

Aqueous dispersions of a radically polymerized addition polymers:
- Joncryl® DFC 3030: anionically stabilized acrylic copolymer, neutralized with NH₃, 47% solids content commercially available from BASF SE (Ludwigshafen, Germany) described in Example 1 from WO 2006/115729
- Joncryl® DFC 3040: anionically stabilized styrene-acrylic copolymer, neutralized with NH₃, 45% solids content commercially available from BASF SE (Ludwigshafen, Germany) described in Example 2 from WO 2006/115729
- Vinyl-A: anionically stabilized styrene-acrylic copolymer, neutralized with NaOH, 53% solids content detailed manufacture procedure given below
- Vinyl-B: anionically stabilized styrene-acrylic copolymer, neutralized with NaOH, 52% solids content detailed manufacture procedure given below
- Vinyl-C: anionically stabilized styrene-butadiene copolymer, neutralized with NaOH, 56% solids content detailed manufacture procedure given below

### Vinyl-A

A monomer emulsion is prepared which is composed of 188.35 parts of water, 13.28 parts of a sulfuric-acid hemiester of an ethoxylated fatty-alcohol (32% aqueous solution, sodium salt), 5.00 parts of an ethoxylated fatty alcohol (20% aqueous solution), 21.11 parts of sulfonated phenoxy dodecylbenzene (45% aqueous solution, disodium salt), 7.50 parts of acrylic acid, 7.50 parts of styrene, 485.00 parts of n-butyl acrylate and 8.00 parts of sodium hydroxide (25% aqueous solution). To prepare the initiator solution, 2.0 parts of sodium persulfate were dissolved in 38.00 parts of water. A 1.5-liter glass reactor was charged with 138.70 parts of water and 8.33 parts of a polystyrene seed-latex (d ∼23nm, 33% solids), flooded with nitrogen and heated to 85°C. When the polymerization temperature had been reached, 25% of the initiator solution was added within 5 min and stirred for another 2 min at 150 rpm. Thereafter the monomer emulsion and the remainder of the initiator solution were each metered in at a uniform rate over 3 hours, followed by a post-polymerization hold-time of 30 min. For further depletion of residual monomers, a chemical deodorization was carried out by supplying the reaction mixture with 15.70 parts of 9.55% aqueous tert-butyl hydroperoxide solution and 40.23g of a 6.21% aqueous acetone bisulfite solution simultaneously over a period of 2 hours. After the reaction mixture had cooled to room temperature, 50.00 parts of sodium hydroxide (5% aqueous solution) were added for neutralization.

### Vinyl-B

Similarly to dispersion Vinyl A, a higher-T_{g} emulsion polymer differing in co-monomer composition was prepared. The respective monomer emulsion is composed of 188.35 parts of water, 13.28 parts of a sulfuric-acid hemiester of an ethoxylated fatty-alcohol (32% aqueous solution, sodium salt), 5.00 parts of an ethoxylated fatty alcohol (20% aqueous solution), 21.11 parts of sulfonated phenoxy dodecylbenzene (45% aqueous solution, disodium salt), 7.50 parts of acrylic acid, 60.00 parts of styrene, 432.50 parts of n-butyl acrylate and 8.00 parts of sodium hydroxide (25% aqueous solution).

### Vinyl-C

A first monomer solution is prepared which is composed of 281.44 parts of water, 220.00 parts of a ethoxylated tridecyl-alcohol (20% aqueous solution), 88.00 parts sodium pyrophosphate (3% aqueous solution) and 110.00 parts acrylamide (50% aqueous solution). A second monomer solution is prepared which is composed of 1379.40 parts of styrene and 17.60 parts of tert-dodecyl mecaptane. A 6.0-liter metal reactor with a 3-stage MIG stirrer was charged with 1034.80 parts of water and 42.07 parts of a polystyrene seed-latex (d ∼23nm, 33% solids), flooded with nitrogen and heated to 95°C; at 90°C, 18.07 parts of sodium persulfate (7% aqueous solution) was slowly added and stirred at 200 rpm. When the polymerization temperature had been reached, at the same time several feeds were started being pre-mixed before entering the polymerization vessel: The first monomer solution was metered in over 2.5 hours, the second monomer solution as well as 765.560 parts of butadiene were metered in over 4.5 hours and 343.36 parts of sodium persulfate (7% aqueous solution) was added over 5.5 hours. When the last feed has ended, the reactor was kept for another hour at 95°C for post-polymerization. Thereafter, the mixture was neutralized with 22.00 parts of sodium hydroxide (5% aqueous solution) and cooled down to 85°C. For further depletion of residual monomers, a chemical deodorization was carried out by supplying the reaction mixture with 66.00 parts of 10% aqueous tert.-butyl hydroperoxide solution and 47.02 g of a 13.1% aqueous acetone bisulfite solution simultaneously over a period of 1.5 hours. The reaction mixture was cooled to room temperature.

### Phyllosilicates:

- Na-hect: synthetic sodium fluorohectorite
- L-hect: hectorite modified with L-lysine

### Modification agents:

### L-lysine: (S)-2,6-Diaminohexanoic acid monohydrochloride C₆H₁₄N₂O₂.HCl, reagent grade ≥ 98%, Sigma-Aldrich GmbH, Germany.

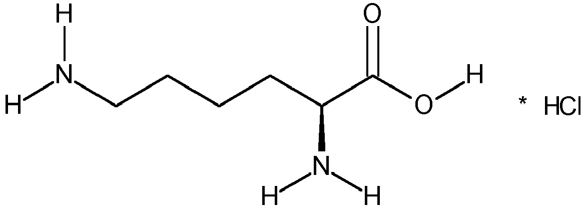

The type of phyllosilicate used in the examples is exfoliated smectite type with layer charge of 0.5 per formula unit (p.f.u.). The synthesis procedure of the used phyllosilicate is described in M. Stoter, D. A. Kunz, M. Schmidt, D. Hirsemann, H. Kalo, B. Putz, J. Senker, J. Breu, Langmuir 2013, 29, 1280-1285. The phyllosilicate is a synthetic sodium fluorohectorite (Na-hect) and has a cation exchange capacity of 127 meq/100 g. The chemical formula is:

[Na_{0.5}.xH₂O]^{int}[Mg_{2.5}Li_{0.5}]^{oct}[Si₄]^{tet}O₁₀F₂

### Modification of the sodium fluorohectorite:

Cationic modification was used to replace sodium cations from the surface of the delaminated layered silicate. Modification provides stabilization of the delaminated layered silicates and compatibilization of the layered silicate with the polymer matrix within the suspension and in the drying step of film-formation.

### Example 1: Modification of delaminated Na-hect (L-hect)

In a 50 ml centrifuge tube 0.25 g of Na-hect was suspended in 30 ml of distillate water. For the surface modification of the Na-hect a 125% of CEC (cation exchange capacity) of the modification agent L-Lysin (dissolved in 5 ml distillate water) was added and placed into an overhead shaker for 12 h. Afterward the modified Na-hect was centrifuged at 10000 rpm, the separated supernatant was discarded and the modified Na-hect was re-suspended in distillate water and again a 125% of CEC of the modification agent L-Lysin (dissolved in 5 ml distillate water) was added and placed into an overhead shaker for 12 h to ensure complete surface modification of Na-hect. Again the modified Na-hect was centrifuged at 10000 rpm and the separated supernatant was discarded and the resulting, completely modified clay (= L-hect) was washed with distilled water washed until the conductivity of the separated supernatant was below 25 µs/cm.

### Example 2: General procedure

Manufacture of coating formulation by suspension of modified phyllosilicate Na-hect in polymer dispersions and preparation of barrier films
Under stirring, the lysine-modified clay (= L-hect) synthesized in Example 1 was added to the required amount of polymer dispersion to produce a suspension with 20 wt.% (based on inorganic material, i.e. without modification agent) of phyllosilicate in the final solid material (the amount of modification agent was calculated on the side of polymer). The final solids content was adjusted to 2.5 wt.% by addition of respective amounts of distilled water yielding a ready-to-use formulation which was applied on the corona-treated side of a pre-heated PET substrate (70°C) via doctor-blading (18 mm/s, 60 µm slit width). The resulting coating film was dried first at ambient conditions, then at 80°C for 48 h and had a dry-film thickness of 1-2 µm (approx. 1.6 µm). Subsequently, the coating was analyzed for its oxygen barrier properties. The results are found in Table 1.

### Examples 3 to 7:

Manufacture of coating formulations by suspension of modified phyllosilicate Na-hect in "low conductivity" polymer emulsions and preparation of barrier films
In a first step, Joncryl® 3030, Joncryl® 3040 as well as vinyl emulsion polymers Vinyl-A to Vinyl-C were post-processed via dialysis to remove excess "background salt". For this purpose, the samples were diluted to a solids content of ca. 20% and dialyzed against distilled water (κ = 0.01 mS/cm) employing an 350 ml Amicon® Stirred Cell from Merck Millipore (Darmstadt, Germany) with a Whatman® Nuclepore™ Track-Etched filter membrane (#111503, diam. 76 mm, pore size 0.05 µm) until electrical conductivity κ of the eluent kept at constant low levels. Afterwards, the general procedure outlined in Example 2 was followed employing the respective dialyzed emulsion polymers.

### Comparative examples C2:

Barrier films based on clay-free polymer emulsions
The as-received vinyl emulsion polymers Joncryl® 3030, 3040 and Vinyl-A to Vinyl-C were diluted with distilled water to such an extent that respective drawdowns via doctor-blading (18mm/s, 60 µm slit width) yielded a dry-film thickness comparable to Examples 3 to 7 (approx 1.6 µm).

### Comparative examples C3-C7:

Manufacture of coating formulations by suspension of modified phyllosilicate Na-hect in "high conductivity" polymer emulsions and preparation of barrier films
The general procedure outlined in Example 2 was followed employing Joncryl® 3030, Joncryl® 3040 as well as vinyl emulsion polymers Vinyl-A to Vinyl-C "as received", i.e. without additional post-treatment at their pristine level of "background salt".

**Table 1: Oxygen barrier properties of polymer-emulsion based coatings OTR of uncoated polymer film = 33.0 [cm³ m⁻² day⁻¹ bar⁻¹]**

| Example | Polymer Emulsion | Particle Size [nm] | Post-treatment | Conductivity [mS/cm] | OTR (75%r.h.) [cm³ m⁻² day⁻¹ bar⁻¹] | OTR (90% r.h. [cm³ m⁻² day⁻¹ bar⁻¹] |
|---|---|---|---|---|---|---|
| Joncryl® 3030¹⁾ | Joncryl® 3030 | 071 | none | 1.29 | 33.0 | |
| C-3 | Joncryl® 3030 | 071 | none | 1.29 | 27.0 | |
| 3 | Joncryl® 3030 | 071 | dialyzed | 0.08 | | 21.6 |
| Joncryl® 3040 ¹⁾ | Joncryl® 3040 | 059 | None | 1.36 | 33.0 | |
| C-4 | Joncryl® 3040 | 059 | None | 1.36 | 21.7 | |
| 4 | Joncryl® 3040 | 059 | dialyzed | 0.06 | | 10.6 |
| C-5 | Vinyl-A | 161 | None | 0.72 | 34.5 | |
| 5 | Vinyl-A | 161 | dialyzed | 0.04 | | 21.8 |
| C-6 | Vinyl-B | 164 | None | 0.63 | 34.0 | |
| 6 | Vinyl-B | 164 | dialyzed | 0.04 | | 17.0 |
| Vinyl-C¹⁾ | Vinyl-C | 164 | none | 0.47 | 33.0 | |
| C-7 | Vinyl-C | 164 | none | 0.47 | 17.5 | |
| 7 | Vinyl-C | 164 | dialyzed | 0.02 | | 8.5 |

| | | | | | | |
|---|---|---|---|---|---|---|
| ¹⁾ neat polymer dispersion without clay | | | | | | |

As can be seen from the data in Table 1, the neat polymer films of any chemistry under evaluation exhibit no barrier performance at all with OTR values in the range of the uncoated PET substrate. By incorporation of 20 wt.% high-aspect ratio clay filler, barrier properties are improved as demonstrated by a substantial reduction in oxygen transmission rates (OTR) compared to the respective clay-free polymer films. For each pair of samples, i.e. Example C-3 vs. 3, there is a clear trend to be observed in that barrier properties of the final nanocomposite film correlate with the conductivity of the corresponding polymer dispersion, i.e. if conductivity of a 2.5% dispersion is high, OTR values are also high . Thus, both Joncryl® grades described in the Experimental section of WO 2006/115729 as suitable binder resins for clay-filled barrier coatings exhibit high conductivities of > 1.0 mS/cm and show only moderate oxygen barrier properties in our test setup. OTR (75% r.h.) values at 20 wt.-% clay loading remain at a 65-80% level, i.e. OTR (75% r.h.) > 20 cm³ m⁻² day⁻¹ bar⁻¹. When their conductivity is brought below a certain threshold of ≤0.6 mS/cm, preferably ≤0.5 mS/cm, O₂ barrier is significantly improved. The same is true for emulsion polymers Vinyl-A to -C where in each case the dialyzed, low conductivity sample exhibits a lower OTR value than its pristine counterpart, even at harsher test conditions of 90% r.h. vs. 75% r.h. Due to the hydrophilic groups of the dispersed polymers water uptake and lower OTR values would be expected at higher humidity (90% r.h.) compared to measurements at lower humidity (75% r.h.). Surprisingly, the OTR values of all low conductivity samples 3 to 7 show lower OTR values than their high conductivity counterparts C3 to C7, even at humidity levels as high as 90% r.h.

## Claims

1. Aqueous coating composition comprising
(a) at least one aqueous dispersion of a radically polymerized addition polymer, wherein the dispersed polymer is at least one polymer selected from the group consisting of acrylic copolymers, styrene-acrylic copolymers, vinyl-acrylic copolymers, styrene-butadiene copolymers, vinyl acetate copolymers, vinyl chloride copolymers and vinylidene chloride copolymers, and
(b) at least one phyllosilicate,
wherein the aqueous polymer dispersion has an electrical conductivity below 0.6 mS/cm, measured at a concentration of 2.5 wt.-% of solids and at 20°C.

2. Aqueous coating composition according to claim 1, wherein the aqueous composition contains
(a) from 10 to 90 wt.%, referring to solids content, of the polymer; and
(b) from 5 to 75 wt.%, referring to solids content, of the phyllosilicate.

3. Aqueous coating composition according to any of the preceding claims, wherein the composition is a one-component composition which does not contain a crosslinker for the polymer.

4. Aqueous coating composition according to any of the preceding claims, wherein the polymer dispersion is a secondary polymer dispersion, polymerized in an organic solvent or in bulk and then dispersed in water; or wherein the polymer dispersion is a primary polymer dispersion, polymerized in water by emulsion or suspension polymerization and then reducing the amount of ionic components in the polymer dispersion.

5. Aqueous coating composition according to any of the preceding claims, wherein the dispersed polymer is obtainable via free-radically initiated polymerization from one or more ethylenically unsaturated, free-radically polymerizable monomers selected from the group consisting of vinylaromatic compounds, conjugated aliphatic dienes, ethylenically unsaturated acids, ethylenically unsaturated carboxamides, ethylenically unsaturated carbonitriles, vinyl esters of saturated C₁ to C₂₀ carboxylic acids, esters of acrylic acid or methacrylic acid with monohydric C₁ to C₂₀ alcohols, allyl esters of saturated carboxylic acids, vinyl ethers, vinyl ketones, dialkyl esters of ethylenically unsaturated dicarboxylic acids, N-vinylpyrrolidone, N-vinylpyrrolidine, N-vinylformamide, N,N-dialkylaminoalkyl acrylamides, N,N-dialkylaminoalkyl methacrylamides, N,N-dialkylaminoalkyl acrylates, N,N-dialkylaminoalkyl methacrylates, vinyl halides, aliphatic hydrocarbons having 2 to 8 carbon atoms and one or two double bonds, or mixtures thereof.

6. Aqueous coating composition according to any of the preceding claims, wherein the polymer is selected from
(i) copolymers from 19.8 to 80 parts by weight of at least one vinylaromatic compound, preferably styrene or methylstyrene, 19.8 to 80 parts by weight of at least one conjugated aliphatic diene, preferably butadiene, 0.1 to 10 parts by weight of at least one ethylenically unsaturated acid, preferably acrylic acid and/or methacrylic acid, and 0 to 20 parts by weight of at least one other monoethylenically unsaturated monomer, wherein the parts by weight of monomer sum to 100;
(ii) copolymers from 19.8 to 80 parts by weight of at least one vinylaromatic compound, preferably styrene or methylstyrene, 19.8 to 80 parts by weight of at least one acrylate monomer selected from alkyl acrylates and alkyl methacrylates with 1 to 20 C-atoms in the alkyl group, preferably methyl acrylate, ethyl acrylate, n-butyl acrylate, ethylhexyl acrylate, propylheptyl acrylate or their mixture, 0.1 to 10 parts by weight of at least one ethylenically unsaturated acid, preferably acrylic acid and/or methacrylic acid, and 0 to 20 parts by weight of at least one other monoethylenically unsaturated monomer, wherein the parts by weight of monomer sum to 100;
(iii) copolymers from vinyl acetate and at least one (meth)acrylate monomer selected from alkyl acrylates and alkyl methacrylates with 1 to 20 C-atoms in the alkyl group;
(iv) ethylene-vinyl acetate copolymers;
(v) acrylate copolymers made more than or equal 80 parts by weight, preferably at least 90 parts by weight of at least one acrylate monomer selected from alkyl acrylates and alkyl methacrylates with 1 to 20 C-atoms in the alkyl group, preferably methyl acrylate, ethyl acrylate, n-butyl acrylate, ethylhexyl acrylate, propylheptyl acrylate or their mixture and no or less than or equal 15 parts by weight of at least one further monomer, different from the acrylate monomer.

7. Aqueous coating composition according to any of the preceding claims, wherein the polymer is constructed from butadiene or mixtures of butadiene and styrene to an extent of at least 60% by weight or from C1 to C20 alkyl (meth)acrylates or mixtures of C1 to C20 alkyl (meth)acrylates and styrene to an extent of at least 60% by weight.

8. Aqueous coating composition according to the preceding claim wherein the vinylaromatic compound is selected from styrene, methylstyrene and their mixture; the conjugated aliphatic diene is selected from 1,3-butadiene, isoprene and their mixture; and the ethylenically unsaturated acid is selected from one or more compounds of the group consisting of acrylic acid, methacrylic acid, itaconic acid, maleic acid, fumaric acid, crotonic acid, vinylacetic acid, vinyllactic acid, vinylsulfonic acid, styrenesulfonic acid, acrylamidomethylpropanesulfonic acid, sulfopropyl acrylate, sulfopropyl methacrylate, vinylphosphonic acid and salts thereof.

9. Aqueous coating composition according to any of the preceding claims, wherein the weight ratio of the dispersed polymer to the phyllosilicate is from 95:5 to 50:50.

10. Aqueous coating composition according to any of the preceding claims, wherein the phyllosilicate is selected from exfoliated organically modified smectites.

11. Aqueous coating composition according to any of the preceding claims, wherein the phyllosilicate is a natural or synthetic phyllosilicate with an aspect ratio of more than 400, preferably more than 1000 or more than 10.000.

12. Aqueous coating composition according to any of the preceding claims, wherein the phyllosilicate is a synthetic smectite of the formula
[M_{n/valency}]^{inter} [M^{I}ₘ M^{II}ₒ]^{oct} [Si₄]^{tet} O₁₀ Y₂,
wherein
M are metal cations of oxidation state 1 to 3 or H⁺,
M' metal cations of oxidation state 2 or 3,
M^{II} are metal cations of oxidation state 1 or 2,
Y are mono-anions,
m for metal atoms M^{I} of oxidation state 3 is ≦2.0
and m for metal atoms M^{I} of oxidation state 2 is ≦3.0,
o is ≦1.0 and
the layer charge n is from greater or equal 0.01 to lower or equal 2.0.

13. Aqueous coating composition according to any of the preceding claims, wherein the phyllosilicate is surface-modified with at least one organic compound having at least one group selected from amino groups and ammonium groups.

14. A polymer film, coated with an aqueous coating composition according to any of the preceding claims, wherein the polymer film can be part of a laminate.

15. Polymer film according to the preceding claim, wherein the oxygen transmission rate of the coated film is less than 70%, preferably less than 40% of the oxygen transmission rate of the uncoated film, measured at 25 °C and 90% relative humidity.

16. Polymer film according to any of claims 14 to 15, wherein the material of the polymer film is selected from polyethylene terephthalate, oriented polypropylene, polyethylene, casted polypropylene, biodegradable aliphatic-aromatic copolyesters, metalized polyethylene terephthalate, metalized oriented polypropylene and polyamide and wherein the thickness of the coating layer after drying is preferably from 0.2 to 50 µm.

17. A package comprising a polymer film according to any of claims 14 to 16.

18. A method of forming a polymeric film with enhanced oxygen barrier properties comprising: applying an aqueous composition according to any of claims 1 to 13 to at least one side of a polymer film and drying said composition to form a barrier coating on the polymer film.

19. Use of the composition according to any of claims 1 to 13 for providing oxygen barrier properties.

## Patentansprüche

1. Wässrige Beschichtungszusammensetzung, umfassend
(a) mindestens eine wässrige Dispersion eines radikalisch polymerisierten Additionspolymers, wobei sich bei dem dispergierten Polymer um mindestens ein Polymer aus der Gruppe bestehend aus Acryl-Copolymeren, Styrol-Acryl-Copolymeren, Vinyl-Acryl-Copolymeren, Styrol-Butadien-Copolymeren, Vinylacetat-Copolymeren, Vinylchlorid-Copolymeren und Vinylidenchlorid-Copolymeren handelt, und
(b) mindestens ein Phyllosilikat,
wobei die wässrige Polymerdispersion eine bei einer Konzentration von 2,5 Gew.-% Feststoffen und bei 20 °C gemessene elektrische Leitfähigkeit von weniger als 0,6 mS/cm aufweist.

2. Wässrige Beschichtungszusammensetzung nach Anspruch 1, wobei die wässrige Beschichtungszusammensetzung
(a) 10 bis 90 Gew.-%, bezogen auf den Feststoffgehalt, des Polymers und
(b) 5 bis 75 Gew.-%, bezogen auf den Feststoffgehalt, des Phyllosilikats.

3. Wässrige Beschichtungszusammensetzung nach einem der vorhergehenden Ansprüche, wobei es sich bei der Zusammensetzung um eine einkomponentige Zusammensetzung handelt, die keinen Vernetzer für das Polymer enthält.

4. Wässrige Beschichtungszusammensetzung nach einem der vorhergehenden Ansprüche, wobei es sich bei der Polymerdispersion um eine in einem organischen Lösungsmittel oder in Substanz polymerisierte und dann in Wasser dispergierte sekundäre Polymerdispersion handelt oder wobei es sich bei der Polymerdispersion um eine in Wasser durch Emulsions- oder Suspensionspolymerisation und anschließende Verringerung der Menge von ionischen Komponenten in der Polymerdispersion polymerisierte primäre Polymerdispersion handelt.

5. Wässrige Beschichtungszusammensetzung nach einem der vorhergehenden Ansprüche, wobei das dispergierte Polymer durch radikalisch initiierte Polymerisation aus einem oder mehreren ethylenisch ungesättigten, radikalisch polymerisierbaren Monomeren aus der Gruppe bestehend aus vinylaromatischen Verbindungen, konjugierten aliphatischen Dienen, ethylenisch ungesättigten Säuren, ethylenisch ungesättigten Carboxamiden, ethylenisch ungesättigten Carbonitrilen, Vinylestern gesättigter C₁- bis C₂₀-Carbonsäuren, Ester der Acrylsäure oder Methacrylsäure mit einwertigen C₁- bis C₂₀-Alkoholen, Allylestern gesättigter Carbonsäuren, Vinylethern, Vinylketonen, Dialkylestern ethylenisch ungesättigter Dicarbonsäuren, N-Vinylpyrrolidon, N-Vinylpyrrolidin, N-Vinylformamid, N,N-Dialkylaminoalkylacrylamiden, N,N-Dialkylaminoalkylmethacrylamiden, N,N-Dialkylaminoalkylacrylaten, N,N-Dialkylaminoalkylmethacrylaten, Vinylhalogeniden, aliphatischen Kohlenwasserstoffen mit 2 bis 8 Kohlenstoffatomen und einer oder zwei Doppelbindungen oder Mischungen davon erhältlich ist.

6. Wässrige Beschichtungszusammensetzung nach einem der vorhergehenden Ansprüche, wobei das Polymer aus
(i) Copolymeren aus 19,8 bis 80 Gewichtsteilen mindestens einer vinylaromatischen Verbindung, vorzugsweise Styrol oder Methylstyrol, 19,8 bis 80 Gewichtsteilen mindestens eines konjugierten aliphatischen Diens, vorzugsweise Butadien, 0,1 bis 10 Gewichtsteilen mindestens einer ethylenisch ungesättigten Säure, vorzugsweise Acrylsäure und/oder Methacrylsäure, und 0 bis 20 Gewichtsteilen mindestens eines anderen monoethylenisch ungesättigten Monomers, wobei sich die Gewichtsteile der Monomere zu 100 summieren;
(ii) Copolymeren aus 19,8 bis 80 Gewichtsteilen mindestens einer vinylaromatischen Verbindung, vorzugsweise Styrol oder Methylstyrol, 19,8 bis 80 Gewichtsteilen mindestens eines Acrylat-Monomers, das aus Alkylacrylaten und Alkylmethacrylaten mit 1 bis 20 C-Atomen in der Alkylgruppe, vorzugsweise Methylacrylat, Ethylacrylat, n-Butylacrylat, Ethylhexylacrylat, Propylheptylacrylat oder einer Mischung davon, ausgewählt ist, 0,1 bis 10 Gewichtsteilen mindestens einer ethylenisch ungesättigten Säure, vorzugsweise Acrylsäure und/oder Methacrylsäure, und 0 bis 20 Gewichtsteilen mindestens eines anderen monoethylenisch ungesättigten Monomers, wobei sich die Gewichtsteile der Monomere zu 100 summieren;
(iii) Copolymeren aus Vinylacetat und mindestens einem (Meth)acrylat-Monomer, das aus Alkylacrylaten und Alkylmethacrylaten mit 1 bis 20 C-Atomen in der Alkylgruppe ausgewählt ist;
(iv) Ethylen-Vinylacetat-Copolymeren;
(v) Acrylat-Copolymeren aus mehr als oder gleich 80 Gewichtsteilen, vorzugsweise mindestens 90 Gewichtsteilen, mindestens eines Acrylat-Monomers, das aus Alkylacrylaten und Alkylmethacrylaten mit 1 bis 20 C-Atomen in der Alkylgruppe, vorzugsweise Methylacrylat, Ethylacrylat, n-Butylacrylat, Ethylhexylacrylat, Propylheptylacrylat oder einer Mischung davon, ausgewählt ist, und keinem oder weniger als oder gleich 15 Gewichtsteilen mindestens eines weiteren Monomers, das von dem Acrylat-Monomer verschieden ist;
ausgewählt ist.

7. Wässrige Beschichtungszusammensetzung nach einem der vorhergehenden Ansprüche, wobei das Polymer mindestens 60 Gew.-% aus Butadien oder Mischungen von Butadien und Styrol oder zu mindestens 60 Gew.-% aus C1- bis C20-Alkyl(meth)acrylaten oder Mischungen von C1- bis C20-Alkyl(meth)acrylaten und Styrol aufgebaut ist.

8. Wässrige Beschichtungszusammensetzung nach dem vorhergehenden Anspruch, wobei die vinylaromatische Verbindung aus Styrol, Methylstyrol und einer Mischung davon ausgewählt ist; das konjugierte aliphatische Dien aus 1,3-Butadien, Isopren und einer Mischung davon ausgewählt ist und die ethylenisch ungesättigte Säure aus einer oder mehreren Verbindungen der Gruppe bestehend aus Acrylsäure, Methacrylsäure, Itaconsäure, Maleinsäure, Fumarsäure, Crotonsäure, Vinylessigsäure, Vinylmilchsäure, Vinylsulfonsäure, Styrolsulfonsäure, Acrylamidomethylpropansulfonsäure, Sulfopropylacrylat, Sulfopropylmethacrylat, Vinylphosphonsäure und Salzen davon ausgewählt ist.

9. Wässrige Beschichtungszusammensetzung nach einem der vorhergehenden Ansprüche, wobei das Gewichtsverhältnis von dispergiertem Polymer zu Phyllosilicat 95:5 bis 50:50 beträgt.

10. Wässrige Beschichtungszusammensetzung nach einem der vorhergehenden Ansprüche, wobei das Phyllosilicat aus exfolierten organisch modifizierten Smektiten ausgewählt ist.

11. Wässrige Beschichtungszusammensetzung nach einem der vorhergehenden Ansprüche, wobei es sich bei dem Phyllosilicat um ein natürliches oder synthetisches Phyllosilicat mit einem Aspektverhältnis von mehr als 400, vorzugsweise mehr als 1000 oder mehr als 10.000, handelt.

12. Wässrige Beschichtungszusammensetzung nach einem der vorhergehenden Ansprüche, wobei es sich bei dem Phyllosilicat um einen synthetischen Smektit der Formel
[M_{n/Valenz}]^{inter}[M^{I}ₘM^{II}ₒ]^{oct}[Si₄]^{tet}O₁₀Y₂ handelt,
wobei
M für Metallkationen der Oxidationsstufe 1 bis 3 oder H⁺ steht,
M^{I} für Metallkationen der Oxidationsstufe 2 oder 3 steht,
M^{II} für Metallkationen der Oxidationsstufe 1 oder 2 steht,
Y für Monoanionen steht,
m für Metallatome M^{I} der Oxidationsstufe 3 ≦ 2,0 steht
und m für Metallatome M^{I} der Oxidationsstufe 2 ≤ 3,0 steht,
o ≦ 1,0 ist und
die Schichtladung n größer oder gleich 0,01 bis kleiner oder gleich 2,0 ist.

13. Wässrige Beschichtungszusammensetzung nach einem der vorhergehenden Ansprüche, wobei das Phyllosilicat mit mindestens einer organischen Verbindung mit mindestens einer Gruppe, die aus Aminogruppen und Ammoniumgruppen ausgewählt ist, oberflächenmodifiziert ist.

14. Polymerfolie, beschichtet mit einer wässrigen Beschichtungszusammensetzung nach einem der vorhergehenden Ansprüche, wobei die Polymerfolie Teil eines Laminats sein kann.

15. Polymerfolie nach dem vorhergehenden Anspruch, wobei die Sauerstofftransmissionsrate der beschichteten Folie weniger als 70 %, vorzugsweise weniger als 40 %, der Sauerstofftransmissionsrate des unbeschichteten Films, gemessen bei 25 °C und 90 % relativer Luftfeuchtigkeit, beträgt.

16. Polymerfolie nach einem der Ansprüche 14 bis 15, wobei das Material der Polymerfolie aus Polyethylenterephthalat, orientiertem Polypropylen, Polyethylen, gegossenem Polypropylen, biologisch abbaubaren aliphatisch-aromatischen Copolyestern, metallisiertem Polyethylenterephthalat, metallisiertem orientiertem Polypropylen und Polyamid ausgewählt ist und wobei die Dicke der Beschichtungsschicht nach dem Trocknen vorzugsweise 0,2 bis 50 µm beträgt.

17. Verpackung, umfassend eine Polymerfolie nach einem der Ansprüche 14 bis 16.

18. Verfahren zur Bildung einer Polymerfolie mit verbesserten Sauerstoffbarriereeigenschaften, bei dem man eine wässrige Zusammensetzung nach einem der Ansprüche 1 bis 13 auf mindestens eine Seite einer Polymerfolie aufbringt und die Zusammensetzung zur Bildung einer Barrierebeschichtung auf der Polymerfolie trocknet.

19. Verwendung der Zusammensetzung nach einem der Ansprüche 1 bis 13 zur Bereitstellung von Sauerstoffbarriereeigenschaften.

## Revendications

1. Composition aqueuse de revêtement comprenant :
(a) au moins une dispersion aqueuse d'un polymère d'addition polymérisé par polymérisation radicalaire, dans laquelle le polymère dispersé est au moins un polymère sélectionné dans le groupe constitué de copolymères acryliques, de copolymères styrène-acryliques, de copolymères vinyl-acryliques, de copolymères de styrène-butadiène, de copolymères d'acétate de vinyle, de copolymères de chlorure de vinyle, et de copolymères de chlorure de vinylidène, et
(b) au moins un phyllosilicate,
dans laquelle la dispersion aqueuse de polymère a une conductivité électrique inférieure à 0,6 mS/cm, mesurée à une concentration de 2,5 % en poids de solides et à 20 °C.

2. Composition aqueuse de revêtement selon la revendication 1, la composition aqueuse contenant :
(a) de 10 à 90 % en poids, relativement à la teneur en solides, du polymère ; et
(b) de 5 à 75 % en poids, relativement à la teneur en solides, du phyllosilicate.

3. Composition aqueuse de revêtement selon l'une quelconque des revendications précédentes, la composition étant une composition monocomposant qui ne contient pas d'agent de réticulation pour le polymère.

4. Composition aqueuse de revêtement selon l'une quelconque des revendications précédentes, dans laquelle la dispersion de polymère est une dispersion secondaire de polymère, polymérisée dans un solvant organique ou en masse, puis dispersée dans de l'eau ; ou dans laquelle la dispersion de polymère est une dispersion primaire de polymère, polymérisée dans de l'eau par polymérisation en émulsion ou en suspension, avec ensuite une réduction de la quantité de constituants ioniques dans la dispersion de polymère.

5. Composition aqueuse de revêtement selon l'une quelconque des revendications précédentes, dans laquelle le polymère dispersé peut être obtenu par polymérisation radicalaire à partir d'un ou plusieurs monomères polymérisables par polymérisation radicalaire, à insaturation éthylénique, sélectionnés dans le groupe constitué de composés vinylaromatiques, de diènes aliphatiques conjugués, d'acides à insaturation éthylénique, de carboxamides à insaturation éthylénique, de carbonitriles à insaturation éthylénique, d'esters vinyliques d'acides carboxyliques C₁-C₂₀ saturés, d'esters d'acide acrylique ou d'acide méthacrylique avec des alcools monohydriques C₁-C₂₀, d'esters allyliques d'acides carboxyliques saturés, d'éthers vinyliques, de vinylcétones, d'esters dialkyliques d'acides dicarboxyliques à insaturation éthylénique, de la N-vinylpyrrolidone, de la N-vinylpyrrolidine, du N-vinylformamide, de N,N-dialkylaminoalkylacrylamides, de N,N-dialkylaminoalkylméthacrylamides, d'acrylates de N,N-dialkylaminoalkyle, de méthacrylates de N,N-dialkylaminoalkyle, d'halogénures de vinyle, d'hydrocarbures aliphatiques comportant 2 à 8 atomes de carbone et une ou deux doubles liaisons, ou de mélanges de ceux-ci.

6. Composition aqueuse de revêtement selon l'une quelconque des revendications précédentes, dans laquelle le polymère est sélectionné parmi :
(i) des copolymères de 19,8 à 80 parties en poids d'au moins un composé vinylaromatique, préférablement du styrène ou du méthylstyrène, 19,8 à 80 parties en poids d'au moins un diène aliphatique conjugué, préférablement du butadiène, 0,1 à 10 parties en poids d'au moins un acide à insaturation éthylénique, préférablement de l'acide acrylique et/ou de l'acide méthacrylique, et 0 à 20 parties en poids d'au moins un autre monomère à insaturation monoéthylénique, la somme des parties en poids des monomères étant de 100 ;
(ii) des copolymères de 19,8 à 80 parties en poids d'au moins un composé vinylaromatique, préférablement du styrène ou du méthylstyrène, 19,8 à 80 parties en poids d'au moins un monomère acrylate sélectionné parmi des acrylates d'alkyles et des méthacrylates d'alkyles comportant 1 à 20 atomes de carbone dans le groupe alkyle, préférablement l'acrylate de méthyle, l'acrylate d'éthyle, l'acrylate de n-butyle, l'acrylate d'éthylhexyle, l'acrylate de propylheptyle ou leur mélange, 0,1 à 10 parties en poids d'au moins un acide à insaturation éthylénique, préférablement de l'acide acrylique et/ou de l'acide méthacrylique, et 0 à 20 parties en poids d'au moins un autre monomère à insaturation monoéthylénique, la somme des parties en poids des monomères étant de 100 ;
(iii) des copolymères d'acétate de vinyle et d'au moins un monomère (méth)acrylate sélectionné parmi des acrylates d'alkyles et des méthacrylates d'alkyles comportant 1 à 20 atomes de carbone dans le groupe alkyle ;
(iv) des copolymères d'éthylène-acétate de vinyle ;
(v) des copolymères d'acrylates constitués de 80 parties en poids ou plus, préférablement d'au moins 90 parties en poids, d'au moins un monomère acrylate sélectionné parmi des acrylates d'alkyles et des méthacrylates d'alkyles comportant 1 à 20 atomes de carbone dans le groupe alkyle, préférablement l'acrylate de méthyle, l'acrylate d'éthyle, l'acrylate de n-butyle, l'acrylate d'éthylhexyle, l'acrylate de propylheptyle ou leur mélange, et de 0 ou 15 parties en poids ou moins d'au moins un monomère supplémentaire, différent du monomère acrylate.

7. Composition aqueuse de revêtement selon l'une quelconque des revendications précédentes, dans laquelle le polymère est construit à partir de butadiène ou de mélanges de butadiène et de styrène dans une mesure d'au moins 60 % en poids ou de (méth)acrylates d'alkyles C₁-C₂₀ ou de mélanges de (méth) acrylates d'alkyles C₁-C₂₀ et de styrène dans une mesure d'au moins 60 % en poids.

8. Composition aqueuse de revêtement selon la revendication précédente, dans laquelle le composé vinylaromatique est sélectionné parmi le styrène, le méthylstyrène et leur mélange ; le diène aliphatique conjugué est sélectionné parmi le 1,3-butadiène, l'isoprène et leur mélange ; et l'acide à insaturation éthylénique est sélectionné parmi un ou plusieurs composés du groupe constitué de l'acide acrylique, de l'acide méthacrylique, de l'acide itaconique, de l'acide maléique, de l'acide fumarique, de l'acide crotonique, de l'acide vinylacétique, de l'acide vinyllactique, de l'acide vinylsulfonique, de l'acide styrènesulfonique, de l'acide acrylamidométhylpropanesulfonique, de l'acrylate de sulfopropyle, du méthacrylate de sulfopropyle, de l'acide vinylphosphonique, et de sels de ceux-ci.

9. Composition aqueuse de revêtement selon l'une quelconque des revendications précédentes, dans laquelle le rapport pondéral du polymère dispersé contre le phyllosilicate est de 95:5 à 50:50.

10. Composition aqueuse de revêtement selon l'une quelconque des revendications précédentes, dans laquelle le phyllosilicate est sélectionné parmi des smectites exfoliées organiquement modifiées.

11. Composition aqueuse de revêtement selon l'une quelconque des revendications précédentes, dans laquelle le phyllosilicate est un phyllosilicate naturel ou synthétique ayant un rapport d'allongement supérieur à 400, préférablement supérieur à 1 000 ou supérieur à 10 000.

12. Composition aqueuse de revêtement selon l'une quelconque des revendications précédentes, dans laquelle le phyllosilicate est une smectite synthétique ayant la formule
[M_{n/valence}]^{inter}[M^{I}ₘM^{II}ₒ]^{oct}[Si₄]^{tet}O₁₀Y₂,
dans laquelle
M représente des cations métalliques ayant un état d'oxydation de 1 à 3 ou H+,
M^{I} représente des cations métalliques ayant un état d'oxydation de 2 ou 3,
M^{II} représente des cations métalliques ayant un état d'oxydation de 1 ou 2,
Y représente des mono-anions,
m, pour les atomes métalliques M^{I} ayant un état d'oxydation de 3, est ≤ 2,0,
et m, pour les atomes métalliques M^{I} ayant un état d'oxydation de 2, est ≤ 3,0,
o est ≤ 1,0 et
la charge de couche n est supérieure ou égale à 0,01 et inférieure ou égale à 2,0.

13. Composition aqueuse de revêtement selon l'une quelconque des revendications précédentes, dans laquelle le phyllosilicate est modifié en surface avec au moins un composé organique comportant au moins un groupe sélectionné parmi des groupes amino et des groupes ammonium.

14. Film de polymère, revêtu d'une composition aqueuse de revêtement selon l'une quelconque des revendications précédentes, le film de polymère pouvant faire partie d'un stratifié.

15. Film de polymère selon la revendication précédente, le coefficient de transmission de l'oxygène du film revêtu étant inférieur à 70 %, préférablement inférieur à 40 %, du coefficient de transmission de l'oxygène du film non revêtu, mesuré à 25 °C et à une humidité relative de 90 %.

16. Film de polymère selon l'une quelconque des revendications 14 ou 15, le matériau du film de polymère étant sélectionné parmi le téréphtalate de polyéthylène, le polypropylène orienté, le polyéthylène, le polypropylène coulé, des copolyesters aliphatiques-aromatiques biodégradables, le téréphtalate de polyéthylène métallisé, le polypropylène orienté métallisé et le polyamide, et l'épaisseur de la couche de revêtement après séchage étant préférablement de 0,2 à 50 µm.

17. Emballage comprenant un film de polymère selon l'une quelconque des revendications 14 à 16.

18. Procédé de formation d'un film de polymère présentant des propriétés de barrière à l'oxygène améliorées, comprenant : l'application d'une composition aqueuse selon l'une quelconque des revendications 1 à 13 sur au moins un côté d'un film de polymère et le séchage de ladite composition pour former un revêtement barrière sur le film de polymère.

19. Utilisation de la composition selon l'une quelconque des revendications 1 à 13 pour apporter des propriétés de barrière à l'oxygène.
